# EUROPÄISCHE PATENTSCHRIFT

(11) **EP 2 586 601 B1**
(45) Veröffentlichungstag und Bekanntmachung des Hinweises auf die Patenterteilung: **11.06.2014**
(21) Anmeldenummer: 12184964.0
(22) Anmeldetag: 19.09.2012
(51) Int. Cl.: B29C 70/86, B29C 70/88, B29C 70/34, B29C 35/08, B29K 705/00, B29L 31/30

(54) **Verfahren zur Herstellung eines Kraftfahrzeughybridbauteils**
Method for manufacturing a motor vehicle hybrid component
Procédé de fabrication d'un composant hybride pour véhicule automobile

(30) Priorität: 28.10.2011 DE 102011054915
(43) Veröffentlichungstag der Anmeldung: 01.05.2013
(73) Patentinhaber: Benteler Automobiltechnik GmbH, 33102 Paderborn (DE)
(72) Erfinder: Kleine, Markus, 59597 Erwitte (DE); Dinius, Waldemar, 33098 Paderborn (DE); Willeit, Stefan, 33824 Werther/Westfalen (DE); Freitas, Jorge, 59494 Soest (DE); Schäfer, Sergej, 33104 Paderborn (DE); Fejcaruk, Marcel, 33104 Paderborn (DE); Thiele, Dieter, 33154 Salzkotten (DE); Rhode, Udo, 33106 Paderborn (DE); Smith, Peter, 33100 Paderborn (DE); Badke, Norbert, 33175 Bad Lippspringe (DE)
(74) Vertreter: Griepenstroh, Jörg

(56) Entgegenhaltungen:
- DE-A1-102008 039 869
- DE-A1-102009 042 272
- DE-A1-102010 005 456

## Beschreibung

Die vorliegende Erfindung betrifft ein Verfahren zur Herstellung eines Kraftfahrzeughybridbauteils gemäß den Merkmalen im Patentanspruch 1.

Die Kraftfahrzeughersteller sind heutzutage bestrebt, möglichst kraftstoffsparende Fahrzeuge herzustellen, die zudem einen geringen CO₂-Ausstoß haben. Zur Kraftstoffeinsparung gibt es verschiedene Ansätze. Zum einen werden neue Motorengenerationen entwickelt, die gleichbleibende Leistung bei deutlich weniger Verbrauch liefern. Dies wird beispielsweise durch Aufladeprozesse der Verbrennungskraftmaschinen ermöglicht. Alternativ dazu werden immer mehr Hybridfahrzeuge eingesetzt, die zusätzlich zu der Verbrennungskraftmaschine auch elektrische Antriebe nutzen.

Darüber hinaus gibt es weitere Möglichkeiten, beispielsweise in der Verbesserung der Strömungseigenschaften eines Kraftfahrzeuges, so dass im Fahrbetrieb durch einen besseren CW-Wert entsprechend ebenfalls Kraftstoff eingespart wird.

Eine weitere Möglichkeit der Kraftstoffeinsparung besteht in der Reduzierung des Eigengewichts des Kraftfahrzeuges selber. Hierdurch muss deutlich weniger Masse bewegt werden, was zu erheblichen Kraftstoffeinsparpotenzialen und somit auch zu einem geringeren CO₂-Ausstoß führt. Auch hier gibt es verschiedene Möglichkeiten, indem zum einen Leichtmetalllegierungen Einzug halten, zum anderen hochfeste und/oder höchstfeste Stähle im Karosseriebau eingesetzt werden.

Ebenfalls finden immer mehr Faserverbundbauteile oder aber auch Hybridbauteile, die aus einem metallischen Anteil und einem Faserverbundanteil bestehen, Einzug in den Karosseriebau. So werden beispielsweise Motorhauben, Türen, Kofferraumdeckel, Kotflügel oder aber auch Dachflächenelemente oder andere Karosserieteile oder sogar Karosseriestrukturteile als Leichtbauteil hergestellt. Durch immer weiter entwickelte Fertigungsprozesse zur automatisierten Herstellung von Faserverbundbauteilen ist zudem deren Herstellung wirtschaftlicher geworden, so dass sie nicht nur dem Prototypenbau, Supersportwagen oder aber der automobilen Oberklasse vorbehalten sind. So ist die Möglichkeit zur automatisierten Herstellung von Faserverbundbauteilen heutzutage auch wirtschaftlich auf die automobile Mittelklasse anzuwenden.

Beispielsweise ist aus der DE 10 2008 039 869 A1 ein Verfahren zum Herstellen von Leichtbauteilen bzw. zum Herstellen von faserverstärkten Strukturbauteilen bekannt, bei dem ein zu verstärkendes Grundstrukturelement und ein Verstärkungselement miteinander gekoppelt werden. Zunächst wird hierbei das Verstärkungselement konfektioniert und das Grundstrukturelement erwärmt. Anschließend werden beide Bauteile miteinander gefügt, verpresst und trocknen aus.

Aus fertigungstechnischer Sicht treten jedoch aufgrund des Erwärmens des Grundstrukturelementes recht hohe Energiekosten zum Durchführen des Fertigungsverfahrens auf.

Auch die DE 10 2009 042 272 A1 offenbart ein Verfahren zur Herstellung eines Leichtbauteils, welches aus einem Metallblech und einer aus Kunststoff bestehenden Verstärkungsstruktur besteht. Hierbei wird zunächst ein Metallblech stoffschlüssig mit einer Verstärkungsschicht, welche ebenfalls aus Kunststoff besteht, verbunden und anschließend wiederum stoffschlüssig mit der aus Kunststoff bestehenden Verstärkungsstruktur verbunden. Beide Kunststoffe können zur Verstärkung des Werkstoffes Verstärkungsfasern beinhalten. Hierbei ist es zudem vorgesehen, dass das mit dem Vorprodukt verstärkte Metallblech in ein separates Spritzugusswerkzeug eingelegt wird und zusätzlich ein Thermoplast aufgespritzt wird.

Die zuvor genannte Aufgabe wird erfindungsgemäß mit einem Verfahren zur Herstellung eines Kraftfahrzeughybridbauteils mit den Merkmalen im Patentanspruch 1 gelöst.

Vorteilhafte Ausführungsvarianten der vorliegenden Erfindung sind Bestandteil der abhängigen Patentansprüche.

Das erfindungsgemäße Verfahren zur Herstellung eines Kraftfahrzeughybridbauteils mit einem metallischen Grundkörper und einem Verstärkungspad aus Faserverbundwerkstoff ist gekennzeichnet durch folgende Verfahrensschritte:
- Herstellen des Grundkörpers als dreidimensional ausgeformtes Kraftfahrzeugbauteil;
- Bereitstellen mindestens einer Lage Faserwerkstoff, vorzugsweise Bereitstellen von zwei, insbesondere drei oder mehr Lagen Faserwerkstoff, welche übereinander gestapelt werden, wobei die Lagen mit Harz vorimprägniert sind und/oder mit einem Harz beaufschlagt werden;
- Zuschnitt des Faserwerkstoffes zu einem Vorformteil;
- Auflegen des Zuschnittes auf eine Vorform und Erwärmen des Zuschnittes wobei zur Erwärmung des Zuschnittes die Vorform erwärmt wird, wobei der Zuschnitt durch die Wärmeeinwirkung eine dreidimensionale Vorformung erhält;
- Positionieren des Grundkörpers über den auf der Vorform liegenden Zuschnitt;
- Anformen des Zuschnittes an den Grundkörper durch Anpressen des Grundkörpers und/oder der Vorform;
- Aushärten des Zuschnittes.

Grundsätzlich wird zunächst aus einer metallischen Blechplatine ein Grundkörper hergestellt. Der Grundkörper kann beispielsweise aus einem Stahlwerkstoff hergestellt sein, insbesondere durch ein Warmumform- und Presshärtverfahren. Der Grundkörper kann jedoch auch aus einem Leichmetallwerkstoffwerkstoff hergestellt sein. Bei dem Grundkörper handelt es sich insbesondere um ein Kraftfahrzeugstrukturbauteil, ganz besonders bevorzugt um eine Kraftfahrzeugsäule und insbesondere um eine B-Säule eines Kraftfahrzeuges. Im Rahmen der Erfindung kann es sich jedoch auch um einen Dachholm oder ein sonstiges Kraftfahrzeugbauteil, wie beispielsweise einen Längsträger, einen Querträger, eine Bodenplatte, einen Getriebetunnel oder aber auch einen Kraftfahrzeugdeckel, beispielsweise eine Motorhaube, eine Tür oder Ähnliches handeln.

Der metallische Grundkörper weist zunächst zu Beginn des erfindungsgemäßen Herstellungsverfahrens für das Hybridbauteil seine Endgeometrie auf, d. h. der metallische Grundkörper wird durch das Herstellungsverfahren des eigentlichen Hybridbauteils nicht oder nur unwesentlich weiter verformt.

Weiterhin wird mindestens eine Lage aus Faserwerkstoff, vorzugsweise zwei übereinander gestapelte Lagen, insbesondere drei oder mehr übereinander gestapelte Lagen aus Faserwerkstoff bereitgestellt, wobei die Lagen selbst mit Harz vorimprägniert sind und/oder mit einem Harz beaufschlagt werden. Die so bereitgestellte Lage aus Faserwerkstoff bzw. Lagen aus Faserwerkstoff werden hieran anschließend zu einem Zuschnitt zugeschnitten. Bei dem Zuschnitt selber handelt es sich um ein Vorformteil, dass in einem weiteren Verfahrensschritt auf eine Vorform aufgelegt und auf der Vorform erwärmt wird.

Der Zuschnitt selber entspricht dabei im Wesentlichen den äußeren Geometrieabmessungen des Verstärkungspatches. Auf der Vorform erhält der Zuschnitt beispielsweise durch die Wärmeeinwirkung bereits eine leichte Wölbung, also eine dreidimensionale Vorformung. Anschließend wird der Grundkörper über dem auf der Vorform liegenden Zuschnitt positioniert. Unter einem Positionieren ist im Rahmen der Erfindung ein Überstülpen bzw. ein Anlegen oder aber auch ein Auflegen zu verstehen. Im Falle einer Kraftfahrzeugsäule weist diese bevorzugt im Querschnitt eine hutförmige Konfiguration auf, wobei die Hutform über den auf der Vorform liegenden Zuschnitt gestülpt wird, so dass der Zuschnitt an einer Innenseite der Hutform zur Anlage kommt.

In einem weiteren erfindungsgemäßen Verfahrensschritt wird der Zuschnitt an den Grundkörper angeformt. Dies geschieht durch Anpressen des Grundkörpers und/oder der Vorform. Hierbei dient der Grundkörper als oberes Anpresswerkzeug und die Vorform als unteres Anpresswerkzeug. Die Innenseite des Grundkörpers und der Zuschnitt selber werden, sofern nicht bereits bei dem Überstülpen geschehen, durch das Anpressen miteinander in Kontakt gebracht und der Zuschnitt wird an die Oberflächentopographie des Grundkörpers angepasst, angeformt bzw. eingeformt. Im Anschluss hieran härtet der Zuschnitt aus und bildet somit den Verstärkungspatch aus Glasfaserwerkstoff.

Im Rahmen der Erfindung erfolgt eine stoffschlüssige Koppelung zwischen dem Zuschnitt und der Innenseite des Grundkörpers maßgeblich durch ein bei dem Anpressen austretendes, insbesondere überschüssiges Harz aus dem Zuschnitt selber. Das Harz stellt eine Klebeverbindung zwischen dem Grundkörper und dem Zuschnitt her. Im Rahmen der Erfindung ist es jedoch auch vorstellbar, zusätzlichen Klebstoff in den Grundkörper und/oder auf den Zuschnitt aufzubringen, um die Klebeverbindung herzustellen bzw. in ihrer Festigkeit weiter zu steigern. Ebenso ist es im Rahmen der Erfindung vorstellbar, den Grundkörper mit einem Primer chemisch vorzubehandeln.

Im Rahmen der Erfindung wird zur Erwärmung des Zuschnittes die Vorform selbst erwärmt oder der Zuschnitt wird durch eine separate Wärmequelle erwärmt. Gerade hier liegt ein wesentlicher Vorteil der Erfindung, da nicht der gesamte Grundkörper erwärmt werden muss, was einen sehr hohen Energieeintrag in das gesamte Bauteil erfordert, sondern lediglich die Vorform selber oder aber der auf der Vorform abgelegte Zuschnitt durch eine entsprechende Wärmevorrichtung.

Bei der Wärmevorrichtung bzw. Wärmequelle handelt es sich im Rahmen der Erfindung insbesondere um beispielsweise einen Wärmestrahler, insbesondere einen Infrarotstrahler oder aber um eine Heizplatte. Im Falle einer Heizplatte erfolgt ein Kontakt zwischen der Heizplatte und dem Zuschnitt, so dass entsprechend ein Wärmeübergang geschaffen ist. Durch die gezielte Erwärmung von nur ausschließlichen Bereichen des Zuschnittes selber ist es somit möglich, das erfindungsgemäße Verfahren zur Herstellung eines Kraftfahrzeughybridbauteils, gegenüber aus dem Stand der Technik bekannten Verfahren deutlich kostengünstiger durchzuführen, da ein geringerer Energieeintrag während der Durchführung des Verfahrens selber stattfindet sowie die Anschaffungskosten zum Aufbau der Fertigungslinie aufgrund kleiner dimensionierter Erwärmungswerkzeuge deutlich geringer ausfallen.

Im Rahmen der Erfindung wird weiterhin besonders bevorzugt der Zuschnitt auf eine Aufheiztemperatur zwischen 40° und 130° C, vorzugsweise zwischen 50° und 120° C, insbesondere zwischen 70° und 90° C erwärmt. Hierbei wird bei den gängigsten, aus dem Stand der Technik bekannten Faserwerkstoffen, wie beispielsweise Carbonfasern, Glasfasern, Aramidfasern, Basaltfasern oder aber auch metallischen Fasern in Verbindung mit einem Harz ein Optimum erreicht, zur Durchführung des Anpressvorganges und den daran anschließenden Aushärtevorgang.

Im Rahmen der Erfindung ist es weiterhin vorstellbar, die Vorform auf eine Temperatur zwischen 150° und 180° C, bevorzugt zwischen 160° und 170° C selbst zu erwärmen. Hierdurch wird sichergestellt, dass der auf die Vorform aufgelegte Zuschnitt die zuvor genannten Temperaturen innerhalb des Zuschnitts selber erreicht.

Weiterhin bevorzugt werden Prepreg-Materialien übereinander gestapelt, aus denen dann der Zuschnitt erstellt wird. Die Prepregs bieten insbesondere den Vorteil, dass der Harzauftrag selber entfällt. Eine Aktivierung des bereits in den Prepregs enthaltenen Harzes wird wiederum durch den Wärmeeintrag realisiert.

Im Rahmen der Erfindung ist es weiterhin vorstellbar, dass der Zuschnitt nach dem Erwärmen auf der Vorform selber auf der Aufheiztemperatur gehalten wird oder dass der Zuschnitt erneut geheizt wird. Hierdurch ist es in vorteilhafter Weise möglich, einen entsprechenden Wärmeeintrag in das bereits aus dem Zuschnitt und dem Grundkörper gebildeten Hybridbauteils zu gewährleisten, so dass bei einer anschließenden Weiterverarbeitung eine Restwärme in dem Bauteil selbst gehalten ist. Durch das erneute bzw. mehrmalige Erwärmen wird ein stufenweises Anformen bzw. ein stufenweises Aktivieren und/oder Aushärten des Harzes in dem Zuschnitt möglich.

Im Rahmen der Erfindung ist es weiterhin möglich, dass nach dem Anpressen des Grundkörpers an den Zuschnitt das dadurch hergestellte Hybridbauteil erneut erwärmt wird oder dass der Bereich, in dem der Zuschnitt angeformt ist, auf einer Haltetemperatur gehalten wird. Entsprechend zuvor genannte Vorteile ergeben sich hier analog.

Im Rahmen der Erfindung wird weiterhin das Hybridbauteil in ein separates Pressenwerkzeug transferiert und der Zuschnitt und der Grundkörper werden ergänzend verpresst. Der Transfer in das Pressenwerkzeug selber kann dabei bereits kurz nach dem Anformen des Zuschnitts an den Grundkörper geschehen, wobei der Übergangsdauer nach dem Anformen ein Teilaushärten des in dem Zuschnitt befindlichen Harzes vollzogen wird.

Im Rahmen der Erfindung wird das Hybridbauteil in dem Pressenwerkzeug einer Temperatur zwischen 120° und 200° C, bevorzugt zwischen 150° und 170° C verpresst. Erneut wird durch das Verpressen in oben genannten Temperaturbereichen ein Optimum hergestellt zwischen Formbarkeit des Zuschnittes in den Grundkörper hinein und anschließendem Aushärtevorgang. Bei dem Verpressen wird weiterhin sichergestellt, dass etwaige Lufteinschlüsse zwischen dem Zuschnitt und dem Grundkörper ausgepresst werden, so dass eine homogene Anbindung bzw. Klebeschicht zwischen dem Zuschnitt und dem Grundkörper sichergestellt ist.

Weiterhin bevorzugt wird das Pressenwerkzeug für eine Haltezeit von weniger als 10 Minuten, insbesondere weniger als 6 Minuten und ganz besonders bevorzugt weniger als 5 Minuten, mindestens jedoch für eine Sekunde geschlossen gehalten, um den Zuschnitt mit dem Grundkörper produktionssicher zu verpressen. Je nach Aushärtestufe der einzelnen Faserlagen und/oder des optional aufgetragenen Klebstoffes zwischen Zuschnitt und Grundkörper ist es somit möglich, besonders kurze Taktzeiten zu realisieren. Beispielsweise kann nach dem Anpressen auf der Vorform die Endkontur des Verstärkungspatches durch den Zuschnitt eingenommen sein, wobei der zwischen dem Verstärkungspatch und dem Grundkörper befindliche Klebstoff noch nicht ausgehärtet ist. Durch den Pressvorgang wird abschließend dann eine homogene Klebeschicht ausgebildet und durch die Einwirkung von Wärme entsprechend ausgehärtet.

Im Rahmen der Erfindung ist es weiterhin vorstellbar, das gesamte Hybridbauteil während des Herstellprozesses auf eine Temperatur von bis zu 180° C zu erwärmen.

In einer weiteren vorteilhaften Ausführungsvariante der vorliegenden Erfindung wird beim Einlegen in das Pressenwerkzeug eine Trennfolie und/oder eine Abdichtungsfolie zwischen Zuschnitt und Pressenwerkzeug selber platziert. Durch die Trennfolie wird zunächst verhindert, dass überschüssig austretender Kleber und/oder überschüssig austretendes Harz zu einem Verkleben von Pressenwerkzeug und Hybridbauteil und/oder Verstärkungspatch führt. Bei der Trennfolie kann es sich um eine Einmalfolie bzw. Wegwerffolie handeln oder aber auch um eine Folie, die anschließend auf dem Bauteil verbleibt, so dass ein zusätzlicher Korrosionsschutz sichergestellt ist, in dem Übergangsbereich von Verstärkungspatch zu Grundkörper. Im Rahmen der Erfindung ist es weiterhin optional möglich, eine Abdichtungsfolie einzubringen, die im Gegensatz zu der Trennfolie maßgeblich eine Abdichtfunktion erfüllt. Bei der Abdichtfunktion handelt es sich dabei im Rahmen der Erfindung um die Möglichkeit, gezielte Bereiche freizuhalten, so dass hier kein austretendes Harz und/oder Klebstoff zu einer Verunreinigung der Oberfläche des abzudichtenden Bereiches erfolgt. Im Rahmen der Erfindung ist es beispielsweise vorstellbar, dass an diese Bereiche andere Bauteile formschlüssig und/oder stoffschlüssig gekoppelt werden. Beispielsweise kann es sich um Bereiche handeln, in denen Schweißverbindungen hergestellt werden und/oder in denen formschlüssige Montagen, beispielsweise in Form eines Türfangbandes, erfolgen.

Insbesondere im Falle der Herstellung einer Kraftfahrzeugsäule ist es im Rahmen der Erfindung auch vorstellbar, dass der Grundkörper nicht über den auf der Vorform liegenden Zuschnitt übergestülpt wird, sondern dass der auf der Vorform befindliche erwärmte Zuschnitt in den Grundkörper selber eingeformt wird. In diesem Falle übernimmt der Grundkörper eine Funktion eines Unterwerkzeuges und die Vorform eine Funktion eines Oberwerkzeuges. Die vorangegangenen bzw. weiterfolgenden Schritte werden jedoch analog ausgeführt.

Weiterhin ist mit dem erfindungsgemäßen Verfahren ein Kraftfahrzeughybridbauteil herstellbar, welches aus einem metallischen Grundkörper und einem Verstärkungspatch aus Faserverbundwerkstoff besteht. Das Kraftfahrzeughybridbauteil ist gegenüber aus dem Stand der Technik bekannten Hybridbauteilen kostengünstiger zu fertigen und weist eine höhere Genauigkeit und damit verbunden bessere Versteifungs- bzw. Crashperformance auf, als mit herkömmlichen Verfahren hergestellte Fahrzeughybridbauteile.

Die zuvor genannten Merkmale sind beliebig untereinander zu kombinieren, mit den dann einhergehenden Vorteilen, ohne dabei den Rahmen der Erfindung zu verlassen.

Weitere Vorteile, Merkmale, Eigenschaften und Aspekte der vorliegenden Erfindung sind Bestandteil der folgenden Beschreibung. Bevorzugte Ausführungsvarianten sind in den schematischen Figuren dargestellt. Diese dienen dem einfachen Verständnis der Erfindung. Es zeigen:
- Figur 1: einen Grundkörper und einen Zuschnitt vor Anformen;
- Figur 2: einen Grundkörper mit angeformtem Zuschnitt und

- Figur 3: einen schematischen Ablauf des erfindungsgemäßen Herstellungsverfahrens.

In den Figuren werden für gleiche oder ähnliche Bauteile dieselben Bezugszeichen verwendet, auch wenn eine wiederholte Beschreibung aus Vereinfachungsgründen entfällt.

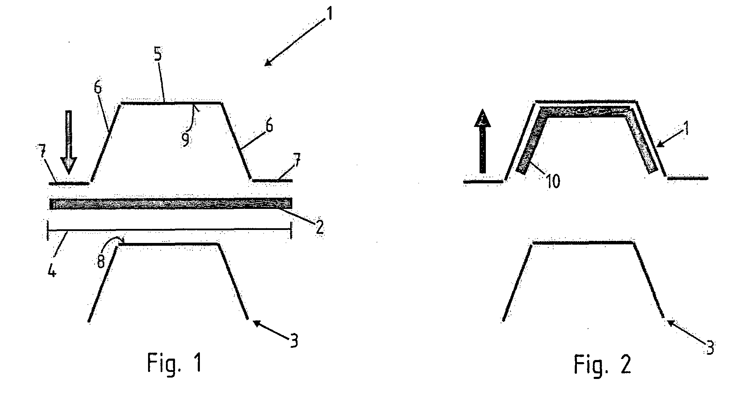

Figur 1 zeigt einen im Querschnitt dargestellten Grundkörper 1 mit darunter befindlichem Zuschnitt 2. Der Zuschnitt 2 wird auf einer Vorform 3 abgelegt. Die äußeren geometrischen Abmessungen des Zuschnittes 2, hier exemplarisch dargestellt durch die Breite 4, entsprechen dabei den geometrischen Abmessungen des herzustellenden Verstärkungspatches 10. Der Grundkörper 1 weist im Querschnitt eine im Wesentlichen hutförmige Geometrie auf, die aus einem Bodensteg 5 mit daran angegliederten Schenkeln 6 und an den Schenkeln 6 sich wiederum anschließenden Flanschen 7 ausgebildet ist. Die Vorform 3 entspricht dabei mit einer Formfläche 8 im Wesentlichen der Innenseite 9 des Grundkörpers 1. Wird der Zuschnitt 2, wie hier dargestellt, auf der Vorform 3 abgelegt, so wird durch weiteres Absenken des Grundkörpers 1 entsprechend der Zuschnitt 2 in den Grundkörper 1 angeformt bzw. eingeformt.

In Figur 2 ist der Zuschnitt bereits in den Grundkörper 1 eingeformt, so dass er im Wesentlichen dem hergestellten Verstärkungspatch 10 entspricht.

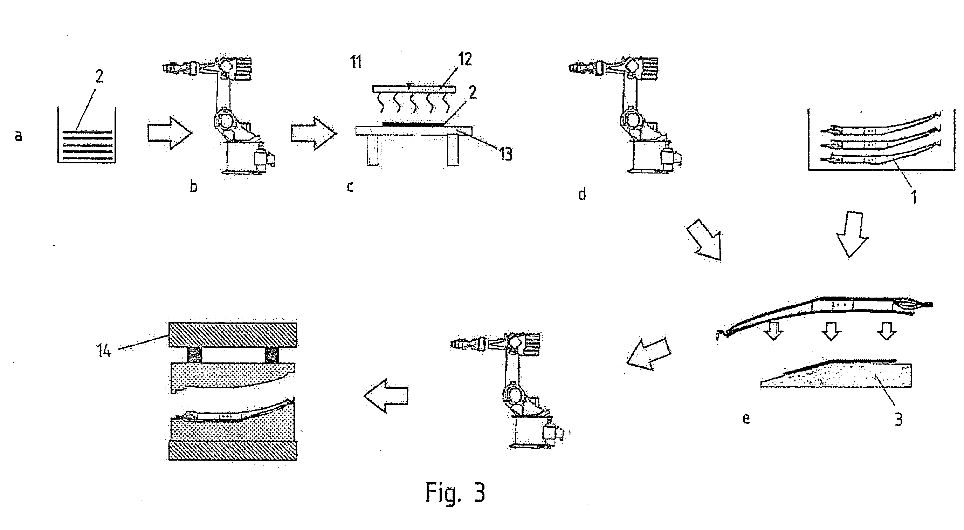

In Figur 3 ist ein schematischer Ablauf des erfindungsgemäßen Herstellungsverfahrens gezeigt. Zunächst ist im Bereich von Position a die Vorratsstapelfaserlagen bzw. bereits aus den Faserlagen herausgeschnittenen Zuschnitten 2 bereitgestellt. Diese werden durch einen Manipulator im Bereich von Bezugszeichen b zu einer Heizeinrichtung 11 verbracht. Hierbei kann es sich beispielsweise um einen Wärmestrahler 12 handeln oder aber auch um eine Heizplatte 13, auf der der Zuschnitt 2 abgelegt wird. Im Anschluss hieran wird im Bereich von Bezugszeichen d durch einen weiteren Manipulator der erwärmte Zuschnitt 2 auf der Vorform 3 abgelegt.

Im Rahmen der Erfindung ist es jedoch auch möglich, den Zuschnitt 2 direkt auf der Vorform 3 zu heizen und/oder die Vorform 3 selbst zu heizen. Die Grundkörper 1 werden anschließend über der Vorform 3 positioniert und abgesenkt, sodass der Zuschnitt 2 in den Grundkörper 1 eingeformt wird. In einer hieran anschließenden Manipulatoroperation im Bereich des Bezugszeichens e wird das so aus dem Zuschnitt 2 und dem Grundkörper 1 vorkonfektionierte Hybridbauteil durch einen weiteren Manipulator in eine Presse 14 transferiert, wobei es in der Presse 14 entsprechend verpresst wird. Bereits während des Herstellungsverfahrens oder nach dem Pressenvorgang härtet der Zuschnitt 2 aus und bildet somit den auf bzw. in dem Grundkörper 1 angeordneten Verstärkungspatch 10.

Im Rahmen der Erfindung ist es ebenfalls möglich, dass die Vorform 3 gemäß Figur 3e drehbar ausgebildet ist. Die Vorform 3 kann somit um ihre eigene Achse getrennt werden, um beispielsweise auch in eine hier dargestellte B-Säule als Grundkörper 1 eingepresst zu werden. Im Rahmen der Erfindung ist es weiterhin möglich, dass in der Vorform 3 selber aktive Elemente angeordnet sind. Beispielsweise kann es sich dabei um Ausdrücker handeln, die den angepressten Faserzuschnitt von der Oberfläche der Vormform 3 in Abdrücken lösen, wobei dann der Grundkörper 1 mit dem angepressten Faserzuschnitt durch den Manipulator entnommen werden kann und in die Presse 14 transferiert werden kann. Im Rahmen der Erfindung kann es sich bei den aktiven Elementen jedoch auch um aktiv ausfahrbare Spalten handeln, die nach aufsetzen des Grundkörpers 1 auf die Vorform 3 mit aufgelegtem Zuschnitt 2 ein andrücken bzw. einformen oder aber auch einstreifen in die Innenmantelfläche des Grundkörpers 1 ermöglichen.

### Bezugszeichen:

- 1: - Grundkörper
- 2: - Zuschnitt
- 3: - Vorform
- 4: - Breite
- 5: - Bodensteg
- 6: - Schenkel
- 7: - Flansch
- 8: - Formfläche
- 9: - Innenseite
- 10: - Verstärkungspatch
- 11: - Heizeinrichtung
- 12: - Wärmestrahler
- 13: - Heizplatte
- 14: - Presse

## Patentansprüche

1. Verfahren zur Herstellung eines Kraftfahrzeughybridbauteils mit einem metallischen Grundkörper (1) und einem Verstärkungspatch (10) aus Faserverbundwerkstoff, **gekennzeichnet, durch** folgende Verfahrensschritte:
- Herstellen des Grundkörpers (1) als dreidimensional ausgeformtes Kraftfahrzeugbauteil;
- Bereitstellen mindestens einer Lage Faserwerkstoff, vorzugsweise Bereitstellen von zwei, insbesondere drei oder mehr Lagen Faserwerkstoff, welche übereinander gestapelt werden, wobei die Lagen mit Harz vorimprägniert sind und/oder mit einem Harz beaufschlagt werden;
- Zuschnitt des Faserwerkstoffes zu einem Vorformteil;
- Auflegen des Zuschnittes (2) auf eine Vorform (3) und Erwärmen des Zuschnittes (2), wobei zur Erwärmung des Zuschnittes (2) die Vorform (3) erwärmt wird oder dass der Zuschnitt (2) **durch** eine separate Wärmequelle erwärmt wird, wobei der Zuschnitt (2) **durch** die Wärmeeinwirkung eine dreidimensionale Vorformung erhält;
- Positionieren des Grundkörpers (1) über den auf der Vorform (3) liegenden Zuschnitt (2);
- Anformen des Zuschnittes (2) an den Grundkörper (1) **durch** Anpressen des Grundkörpers (1) und/oder der Vorform (3);
- Aushärten des Zuschnittes (2).

2. Verfahren nach Anspruch 1, **dadurch gekennzeichnet, dass** als separate Wärmequelle ein Wärmestrahler (12), vorzugsweise Infrarotstrahler verwendet wird, oder eine Heizplatte (13) verwendet wird, wobei die Heizplatte (13) auf den Zuschnitt (2) aufgelegt wird oder der Zuschnitt (2) auf die Heizplatte (13) abgelegt wird.

3. Verfahren nach einem der Ansprüche 1 oder 2, **dadurch gekennzeichnet, dass** der Zuschnitt (2) auf eine Aufheiztemperatur zwischen 40 und 130 °C, vorzugsweise 50 bis 120°C, und insbesondere 70 bis 90°C erwärmt wird.

4. Verfahren nach einem der Ansprüche 1 bis 3, **dadurch gekennzeichnet, dass** die Vorform (3) auf eine Temperatur zwischen 150 und 180°C, bevorzugt zwischen 160 und 170°C erwärmt wird.

5. Verfahren nach einem der Ansprüche 1 bis 4, **dadurch gekennzeichnet, dass** als Zuschnitt (2) ein Stapel aus Prepreg Bahnen verwendet wird.

6. Verfahren nach Anspruch 4 oder 5, **dadurch gekennzeichnet, dass** der Zuschnitt (2) nach dem Erwärmen auf der Vorform (3) auf der Aufheiztemperatur gehalten wird oder dass der Zuschnitt (2) erneut geheizt wird.

7. Verfahren nach einem der Ansprüche 1 bis 6, **dadurch gekennzeichnet, dass** nach dem Anpressen des Grundkörpers (1) an den Zuschnitt (2) das so hergestellte Hybridbauteil erneut erwärmt oder das der Bereich, in dem der Zuschnitt (2) angeformt ist auf einer Haltetemperatur gehalten wird.

8. Verfahren nach einem der Ansprüche 1 bis 7, **dadurch gekennzeichnet, dass** das Hybridbauteil in ein separates Pressenwerkzeug transferiert wird und der Zuschnitt (2) und der Grundkörper (1) verpresst werden.

9. Verfahren nach Anspruch 8, **dadurch gekennzeichnet, dass** das Hybridbauteil bei einer Temperatur zwischen 120 und 200°C, bevorzugt zwischen 150 und 170°C verpresst wird.

10. Verfahren nach Anspruch 8 oder 9, **dadurch gekennzeichnet, dass** das Pressenwerkzeug für eine Haltezeit von weniger als 10 Minuten, insbesondere weniger als 6 Minuten und ganz besonders bevorzugt von weniger als 5 Minuten, mindestens jedoch für 1 Sekunde geschlossen gehalten wird.

11. Verfahren nach einem der Ansprüche 1 bis 10, **dadurch gekennzeichnet, dass** das Hybridbauteil während des Herstellprozesses auf eine Temperatur bis zu 180°C erwärmt wird.

12. Verfahren nach einem der Ansprüche 8 bis 11, **dadurch gekennzeichnet, dass** beim Einlegen in das Pressenwerkzeug eine Trennfolie und/oder eine Abdichtungsfolie zwischen Zuschnitt (2) und Pressenwerkzeug platziert wird.

13. Verfahren nach einem der Ansprüche 1 bis 12, **dadurch gekennzeichnet, dass** ein über die Zeit veränderbares Temperaturprofil in dem Pressenwerkzeug durchfahren wird.

14. Verfahren nach einem der Ansprüche 1 bis 13, **dadurch gekennzeichnet, dass** der Zuschnitt (2) in den Grundkörper (1) eingeformt wird.

## Claims

1. Method for producing a motor vehicle hybrid component comprising a metal main body (1) and a reinforcement patch (10) made of fibrous composite material, **characterised by** the following method steps:
- producing the main body (1) as a three-dimensional motor vehicle component;
- providing at least one layer of fibrous material, preferably providing two, in particular three or more, layers of fibrous material which are stacked one on top of the other, the layers being pre-impregnated with resin and/or having a resin applied to them;
- cutting the fibrous material to size to form a preform part;
- placing the blank (2) onto a preform (3) and heating the blank (2), the preform (3) being heated in order to heat the blank (2), or the blank (2) being heated by a separate heat source, or the blank (2) receiving a three-dimensional preforming due to the effect of the heat;
- positioning the main body (1) over the blank (2), which is resting on the preform (3);
- moulding the blank (2) onto the main body (1) by pressing the main body (1) and/or the preform (3);
- hardening the blank (2).

2. Method according to claim 1, **characterised in that** a heat radiator (12), preferably an infrared radiator, or a heating plate (13) is used as the separate heat source, the heating plate (13) being placed onto the blank (2) or the blank (2) being placed down onto the heating plate (13).

3. Method according to either claim 1 or claim 2, **characterised in that** the blank (2) is heated to a heating temperature of between 40 and 130 °C, preferably 50 to 120 °C, and in particular 70 to 90 °C.

4. Method according to any of claims 1 to 3, **characterised in that** the perform (3) is heated to a temperature of between 150 and 180 °C, preferably between 160 and 170 °C.

5. Method according to any of claims 1 to 4, **characterised in that** a stack of prepreg webs is used as the blank (2).

6. Method according to either claim 4 or claim 5, **characterised in that** the blank (2) is held at the heating temperature on the preform (3) after heating, or in that the blank (2) is heated again.

7. Method according to any of claims 1 to 6, **characterised in that** the hybrid component produced thus is heated again once the main body (1) has been pressed onto the blank (2), or **in that** the region in which the blank (2) is moulded is held at a holding temperature.

8. Method according to any of claims 1 to 7, **characterised in that** the hybrid component is transferred into a separate compression mould and the blank (2) and the main body (1) are compressed.

9. Method according to claim 8, **characterised in that** the hybrid component is compressed at a temperature of between 120 and 200 °C, preferably between 150 and 170 °C.

10. Method according to either claim 8 or claim 9, **characterised in that** the compression mould is held closed for a holding time of less than 10 minutes, in particular less than 6 minutes, and most preferably less than 5 minutes, but at least for 1 second.

11. Method according to any of claims 1 to 10, **characterised in that** the hybrid component is heated to a temperature of up to 180 °C during the production process.

12. Method according to any of claims 8 to 11, **characterised in that** a separation film and/or a sealing film is positioned between the blank (2) and the compression mould when said blank is placed in the compression mould.

13. Method according to any of claims 1 to 12, **characterised in that** a temperature profile which varies over time is implemented in the compression mould.

14. Method according to any of claims 1 to 13, **characterised in that** the blank (2) is moulded into the main body (1)

## Revendications

1. Procédé de fabrication d'un composant hybride pour véhicule automobile avec un corps de base métallique (1) et une pièce rapportée de renfort (10) en matériau composite fibreux, **caractérisé par** les étapes consistant à :
- fabriquer le corps de base (1) sous la forme d'un composant de véhicule automobile conformé en trois dimensions ;
- préparer au moins une couche de matériau fibreux, de préférence préparer deux, en particulier trois couches ou plus de matériau fibreux, qui sont empilées l'une sur l'autre, les couches étant pré-imprégnées de résine et/ou alimentées en résine ;
- découper le matériau fibreux sur une pièce de préformage ;
- appliquer la pièce découpée (2) sur une préforme (3) et chauffer la pièce découpée (2), dans lequel la préforme (3) est chauffée pour chauffer la pièce découpée (2) ou la pièce découpée (2) est chauffée par une source de chaleur séparée, la pièce découpée (2) subissant une préformation tridimensionnelle par l'action de la chaleur ;
- positionner le corps de base (1) sur la pièce découpée (2) appliquée sur la préforme (3) ;
- mouler la pièce découpée (2) sur le corps de base (1) par compression du corps de base (1) et/ou de la préforme (3) ; et
- durcir la pièce découpée (2).

2. Procédé selon la revendication 1, **caractérisée en ce que** l'on utilise comme source de chaleur séparée un radiateur thermique (12), de préférence on utilise un émetteur d'infrarouge ou l'on utilise une plaque chauffante (13), la plaque chauffante (13) étant appliquée sur la pièce découpée (2) ou la pièce découpée (2) étant déposée sur la plaque chauffante (13).

3. Procédé selon l'une quelconque des revendications 1 ou 2, **caractérisé en ce que** la pièce découpée (2) est chauffée à une température de chauffage entre 40 et 130 °C, de préférence de 50 à 120 °C, et en particulier de 70 à 90 °C.

4. Procédé selon l'une quelconque des revendications 1 à 3, **caractérisé en ce que** la préforme (3) est chauffée à une température entre 150 et 180 °C, de préférence entre 160 et 170 °C.

5. Procédé selon l'une quelconque des revendications 1 à 4, **caractérisé en ce que** l'on utilise comme pièce découpée (2) une pile de bandes pré-imprégnées.

6. Procédé selon la revendication 4 ou la revendication 5, **caractérisé en ce que** la pièce découpée (2) est maintenue à la température de chauffage après chauffage sur la préforme (3) ou la pièce découpée (2) est à nouveau chauffée.

7. Procédé selon l'une quelconque des revendications 1 à 6, **caractérisé en ce que**, après compression du corps de base (1) sur la pièce découpée (2), le composant hybride ainsi fabriqué est à nouveau chauffé ou la zone, dans laquelle la pièce découpée (2) est moulée, est maintenue à une température de maintien.

8. Procédé selon l'une quelconque des revendications 1 à 7, **caractérisé en ce que** le composant hybride est transféré dans un outil de compression séparé et la pièce découpée (2) et le corps de base (1) sont pressés.

9. Procédé selon la revendication 8, **caractérisé en ce que** le composant hybride est pressé à une température entre 120 et 200 °C, de préférence entre 150 et 170 °C.

10. Procédé selon la revendication 8 ou la revendication 9, **caractérisé en ce que** l'outil de compression est maintenu fermé pendant une période de maintien de moins de 10 minutes, en particulier de moins de 6 minutes, tout particulièrement de moins de 5 minutes, mais au moins de 1 seconde.

11. Procédé selon l'une quelconque des revendications 1 à 10, **caractérisé en ce que** le composant hybride est chauffé pendant le processus de fabrication à une température allant jusqu'à 180 °C.

12. Procédé selon l'une quelconque des revendications 8 à 11, **caractérisé en ce que**, lors de l'insertion dans l'outil de compression, un film de séparation et/ou un film d'étanchéité est placé entre la pièce découpée (2) et l'outil de compression.

13. Procédé selon l'une quelconque des revendications 1 à 12, **caractérisé en ce qu'**un profil de température variable dans le temps est réalisé dans l'outil de compression.

14. Procédé selon l'une quelconque des revendications 1 à 13, **caractérisé en ce que** la pièce découpée (2) est moulée dans le corps de base (1).
